# EUROPÄISCHE PATENTSCHRIFT

(11) **EP 3 851 247 B1**
(45) Veröffentlichungstag und Bekanntmachung des Hinweises auf die Patenterteilung: **16.10.2024**
(21) Anmeldenummer: 20210540.9
(22) Anmeldetag: 30.11.2020
(51) Int. Cl.: B24C 1/00, B24C 3/32, B24C 3/06, B29C 33/72, B25J 11/00, B25J 19/02, B29D 30/06, B25J 21/00, G01B 11/00, G01B 11/02

(54) **REINIGUNGSANLAGE SOWIE REINIGUNGSVERFAHREN**
CLEANING SYSTEM AND METHOD OF CLEANING
INSTALLATION DE NETTOYAGE AINSI QUE PROCÉDÉS DE NETTOYAGE

(30) Priorität: 16.01.2020 DE 102020200467
(43) Veröffentlichungstag der Anmeldung: 21.07.2021
(73) Patentinhaber: Continental Reifen Deutschland GmbH, 30175 Hannover (DE)
(72) Erfinder: Bremer, Jan - c/o Continental AG, 30419 Hannover (DE); Gümmer, Oliver - c/o Continental AG, 30419 Hannover (DE); Svebis, Karel - c/o Continental AG, 30419 Hannover (DE); Kremer, Maximilian - c/o Continental AG, 30419 Hannover (DE); Mayer, Stefan - c/o Continental AG, 30419 Hannover (DE); Schließauf, Jens, 30419 Hannover (DE)
(74) Vertreter: Continental Corporation

(56) Entgegenhaltungen:
- EP-A1- 2 695 728
- EP-A1- 3 162 524
- WO-A1-2016/105308
- WO-A1-2019/115947
- WO-A2-2016/175711
- CN-A- 107 053 552
- DE-A1- 19 830 397
- US-A1- 2005 159 842

## Beschreibung

Die Erfindung betrifft eine Reinigungsanlage zum Reinigen einer Formpresse sowie ein Reinigungsverfahren gemäß den unabhängigen Patentansprüchen. Formpressen zur Herstellung eines Fahrzeugreifens weisen herkömmlicherweise Formsegmente auf, die von Zeit zu Zeit von Gummirückständen zu befreien sind. Dazu sind Reinigungsanlagen bekannt, die mit einer Düse einen Trockeneisstrahl erzeugen, der auf Innenseiten der Formsegmente gerichtet wird. Dadurch können die Innenseiten von Gummirückständen befreit werden. Während des Reinigungsvorganges können die Formsegmente in der Formpresse montiert sein oder aber vorher umständlich demontiert werden. Die Düse kann zudem manuell über die Innenseiten verfahren werden oder aber automatisiert.

Beispielhaft ist eine automatisiert betriebene Reinigungsanlage in EP 1 074 344 B1 beschrieben. Demnach sind an einem Gestell eine Verstelleinheit sowie eine kardanisch aufgehängte Isolationshaube angeordnet. Die Verstelleinheit weist Linearantriebe und eine Schwenkeinrichtung auf, mit denen eine Düse zum Erzeugen des Trockeneisstrahls verstellt werden kann, um den Trockeneisstrahl über die Innenseiten der Formsegmente zu verfahren. Die Ausrichtung der Reinigungsanlage gegenüber der Formpresse bzw. den Formsegmenten erfolgt dadurch, dass die Isolationshaube während des Reinigungsverfahrens an der jeweiligen Formpresse bzw. den Formsegmenten über einen Klemm-/Rastmechanismus fixiert wird. Die Düse befindet sich dabei innerhalb eines Raumes, der durch die Formsegmente und die Isolationshaube begrenzt wird.

Aus den Druckschriften WO 2016/175711 A2, WO 2016/105308 A1, CN 107 053 552 A, EP 2 695 728 A1, WO 2019/115947 A1, EP 3 162 524 A1 und DE 198 30 397 A1 sind ebenfalls Reinigungsanlagen für bei der Reifenherstellung verwendete Formen bekannt. Insbesondere zeigt WO 2016/175711 A2 eine Reinigungsanlage gemäß dem Oberbegriff des Anspruchs 1 und ein Reiningungsverfahren gemäß dem Oberbegriff des Anspruchs 9. Die Druckschrift US 2005/0159842 A1 offenbart ein Messsystem zum Erfassen einer dreidimensionalen Position eines zu messenden Objektes.

Nachteilig hierbei ist, dass die Reinigungsanlage manuell mit den Formsegmenten bzw. der Formpresse zu verklemmen bzw. zu verrasten ist, um den Reinigungsvorgang starten zu können. Dadurch wird der Arbeitsaufwand erhöht. Zudem ist die Isolationshaube individuell an jede Formpresse anzupassen, um das Verklemmen bzw. Verrasten zu ermöglichen. Damit ergibt sich ein teuer und schwer einzurichtender Aufbau. Ergänzend ist die Reinigungsanlage samt Isolationshaube groß und daher schwer zu handhaben. Außerdem ist die Düse über die Verstelleinheit nur sehr unflexibel, langsam und in begrenztem Maße verfahrbar. Dadurch wird eine vollständige Reinigung der Formsegmente sehr aufwändig. Weiterhin sind Reinigungsanlagen bekannt, bei denen die Düse an einem Werkzeug einer Robotereinheit mit mehreren Roboterarmen angeordnet ist, an denen der Schlauch entlanggeführt ist, wobei die Roboterarme derartig gelenkig miteinander verbunden und gegeneinander verschwenkbar sind, dass die Düse bei einer Ansteuerung der Robotereinheit frei im Raum bewegt werden kann. Nachteilig hierbei ist, dass bekannte Robotereinheiten über einen Roboterfuß am Boden montiert sind, d.h. sich in einer Bodenmontageposition befinden. Dadurch ist die Robotereinheit von unten an die einzelnen Formsegment heranzuführen. Da die Formsegmente einer Formpresse im geöffneten Zustand normalerweise übereinander liegen, ist das jeweilige Formsegment also zumindest teilweise zu demontieren, um den Zugang der Robotereinheit zu ermöglichen. Damit bleibt der Reinigungsprozess ebenfalls sehr aufwändig und wenig variabel.

Aufgabe der Erfindung ist daher, eine Reinigungsanlage bereitzustellen, die universell einsetzbar und kompakt ist und mit der Formsegmente einer Formpresse mit wenig Aufwand in flexibler Weise gereinigt werden können. Aufgabe ist weiterhin, ein Reinigungsverfahren anzugeben.

Diese Aufgabe wird durch eine Reinigungsanlage nach Anspruch 1 sowie ein Reinigungsverfahren nach dem weiteren unabhängigen Anspruch 9 gelöst. Die Unteransprüche geben bevorzugte Weiterbildung an.

Demnach ist eine Reinigungsanlage zum Reinigen von Formsegmenten einer Formpresse vorgesehen, mit einem Gestell, einem Trockeneisbehälter und einer damit über einen flexiblen Schlauch verbundenen Düse zum Ausbilden eines Trockeneisstrahls, wobei die Düse mit einer Verstelleinheit wirkverbunden ist und die Düse durch eine elektrische Ansteuerung der Verstelleinheit relativ zum Gestell bewegt werden kann.

Erfindungsgemäß ist dabei vorgesehen, dass die Düse an einem Werkzeug einer Robotereinheit mit mehreren Roboterarmen angeordnet ist, wobei die Roboterarme derartig gelenkig miteinander verbunden und gegeneinander verschwenkbar sind, dass die Düse bei einer Ansteuerung der Robotereinheit frei im Raum bewegt werden kann, wobei ein hinterer Roboterarm um eine Drehachse drehbar mit einem Roboterfuß der Robotereinheit verbunden ist, wobei die Robotereinheit über den Roboterfuß an einer Halterung der Verstelleinheit befestigt ist, wobei die Halterung derartig ausgerichtet ist, dass die Drehachse des hinteren Roboterarms im Wesentlichen horizontal in eine x-Richtung ausgerichtet ist, was einer Wandmontageposition der Robotereinheit entspricht, um der Verstelleinheit zu ermöglichen, die Robotereinheit in eine Start-Position zwischen den Formsegmenten der Formpresse zu bewegen.

Dadurch kann die Düse vorteilhafterweise frei im Raum, d.h. in allen sechs Freiheitsgraden, bewegt werden, so dass sich der Trockeneisstrahl sehr flexibel auf die Formsegmente richten lässt, um die Innenseiten von Gummirückständen befreien zu können. Vorzugsweise sind dabei keine Verbindungselemente zwischen der Reinigungsanlage und der Formpresse bzw. den Formsegmenten vorgesehen, so dass die Reinigungsanlage universell einsetzbar ist. Die Reinigungsanlage kann also ausgehend von der Start-Position einen Reinigungsvorgang durchführen, ohne dabei mit der Formpresse verbunden zu sein, wodurch ein flexibler Einsatz nahezu unabhängig von der Formpresse ermöglicht wird. Die Formsegmente können dabei in Wandeinbaulage der Robotereinheit gereinigt werden, wodurch der Zugang verbessert wird, da die Robotereinheit durch einen Zwischenraum zwischen den Formsegmenten eingeführt und in der Start-Position positioniert werden kann und von da aus der Reinigungsvorgang erfolgen kann. Dadurch kann in einem Reinigungsverfahren die Start-Position derartig gewählt werden, dass die in der Start-Position positionierte Robotereinheit beide Formsegmente der Formpresse aus dem Zwischenraum mit der Düse erreichen kann. Dadurch wird der Reinigungsvorgang optimiert.

Auch eine Isolationshaube wird nicht als Bestandteil der Reinigungsanlage benötigt, so dass die Reinigungsanlage kompakt aufgebaut ist. Dadurch ergibt sich eine gewisse Wendigkeit der Reinigungsanlage. Die Isolationshaube kann beispielweise Bestandteil der Formpresse selbst sein. Die Formpresse kann aber auch in einem schallisolierten Raum angeordnet sein, so dass eine zusätzliche Schallisolierung entfallen kann. Es ist lediglich dafür zu sorgen, dass die Robotereinheit, insbesondere das Werkzeug mit der Düse einen Zugang zu den Formsegmenten hat.

Die erfindungsgemäße Reinigungsanlage umfasst eine Kamera zum Erfassen eines auf den Formsegmenten und/oder auf der Formpresse liegenden Referenz-Bereiches und eine Steuereinheit, die ausgebildet ist, die Verstelleinheit zum Einstellen der Start-Position der Robotereinheit derart anzusteuern, dass eine kamerafeste Struktur in einer festgelegten Relativposition zu einem auf den Formsegmenten und/oder auf der Formpresse in dem Referenz-Bereich angeordneten Referenz-Objekt ausgerichtet wird. Die erfindungsgemäße Reinigungsanlage umfasst zudem einen Abstands-Sensor zum Messen eines Abstandes zwischen dem Werkzeug und den Formsegmenten und/oder der Formpresse, wobei die Steuereinheit ausgebildet ist, die Verstelleinheit zum Einstellen der Start-Position der Robotereinheit derart elektrisch anzusteuern, dass der Abstand an einen Referenz-Abstand angenähert wird.

Vorteilhafterweise ist über die Verstelleinheit eine einfache Ausrichtung der Reinigungsanlage relativ zu den Formsegmenten möglich. Dabei kann vorzugsweise vorgesehen sein, die Reinigungsanlage grob über einen Hubwagen in einem Abstellbereich vor der Formpresse auszurichten und anschließend über die Verstelleinheit eine Feinausrichtung der Robotereinheit durchzuführen, um die jeweilige Start-Position einzustellen, die beispielsweise in der Mitte der Formpresse liegen kann. Ausgehend davon kann dann der vorzugsweise vollautomatisierte Reinigungsvorgang erfolgen, der beispielweise durch eine elektrische Ansteuerung der Robotereinheit erfolgt, wobei dazu ein Rezept verwendet wird, das anhand der vorher ermittelten räumlichen Kontur der Formsegmente, insbesondere der Innenseiten, erstellt wird. Durch die elektrische Ansteuerung der Robotereinheit ist eine flexible Anpassung an unterschiedliche Formpressen und unterschiedlich konturierte Innenseiten möglich.

Vorzugsweise ist weiterhin vorgesehen, dass die Verstelleinheit eine erste Plattform aufweist, an der Antriebsmotoren zum Verdrehen von Spindelmuttern befestigt sind, wobei die Spindelmuttern auf gestellfesten Spindeln laufen, so dass durch eine Ansteuerung der Antriebsmotoren ein Verstellen der ersten Plattform in eine z-Richtung ermöglicht ist. Damit kann eine einfache und genaue Verstellung der Robotereinheit in die z-Richtung bewirkt werden, so dass eine einfache und zuverlässige Feinjustierung relativ zur Formpresse möglich ist.

Vorzugsweise ist weiterhin vorgesehen, dass auf der ersten Plattform ein x-Linearantrieb sowie ein y-Linearantrieb angeordnet sind, die mit der Robotereinheit zusammenwirken, zum Verstellen der Robotereinheit in die x-Richtung und/oder die y-Richtung. Damit können auch die anderen Richtungen in einfacher und zuverlässiger Weise eingestellt werden, um die Robotereinheit in die Start-Position zu bringen, aus der der Reinigungsvorgang gestartet wird.

Vorzugsweise ist weiterhin vorgesehen, dass das Werkzeug mit der Düse an einem vorderen Roboterarm befestigt ist und an dem Werkzeug weiterhin eine Kamera zum Aufnehmen eines Referenz-Bereiches auf den Formsegmenten und/oder auf der Formpresse sowie
ein Abstands-Sensor zum Messen eines Abstandes zwischen dem Referenz-Bereich auf den Formsegmenten und/oder auf der Formpresse und dem Werkzeug angeordnet sind.

Dadurch lässt sich eine relative Position der Düse bzw. des Werkzeuges zum Formsegment in einfacher Weise kontrollieren bzw. einstellen. Darüber kann beispielsweise die Start-Position des Werkzeuges bzw. der Düse in einfacher Weise gefunden werden. Aber auch der Reinigungsvorgang lässt sich dadurch kontrollieren, indem z.B. fortlaufend der Abstand sowie der Referenz-Bereich beobachtet werden.

Vorzugsweise ist weiterhin vorgesehen, dass die Reinigungsanlage weiterhin eine Steuereinheit aufweist, die ausgebildet ist,
- die Verstelleinheit anzusteuern zum Einstellen der Start-Position der Robotereinheit, und/oder
- die Robotereinheit anzusteuern zum freien Bewegen der Düse in allen sechs Freiheitsgraden.

Dadurch lässt sich ein hoher Automatisierungsgrad erreichen, indem durch die Steuereinheit durch entsprechende Vorgaben, beispielsweise über Rezepte, das Verfahren der Düse vorzugsweise vollautomatisiert gesteuert wird, wobei die Bewegung beispielsweise in situ auch von der Steuereinheit überwacht werden kann, beispielsweise anhand des gemessenen Abstandes oder des Kamerabildes der Kamera.

Aber auch die Verstelleinheit kann grundsätzlich vollautomatisiert betrieben werden, wobei die Steuereinheit dann ausgebildet ist, die Verstelleinheit in Abhängigkeit des von dem Abstands-Sensor gemessenen Abstandes und/oder des von der Kamera erfassten Referenz-Bereiches vollautomatisiert anzusteuern zum vollautomatisierten Positionieren der Robotereinheit in der Start-Position. Demnach kann auch bereits die Feinjustierung der Robotereinheit in die Start-Position vollautomatisiert erfolgen, wobei dazu beispielsweise ein entsprechender Algorithmus auf der Steuereinheit ausgeführt werden kann. Dies kann jedoch auch manuell erfolgen, indem Bedienpersonal das Kamerabild und/oder den gemessenen Abstand beobachten und entsprechend einstellen.

In einem erfindungsgemäßen Reinigungsverfahren zum Reinigen einer Formpresse aus Formsegmenten mit einer erfindungsgemäßen Reinigungsanlage sind mindestens die folgenden Schritte vorgesehen:
- Abstellen der Reinigungsanlage in einem Abstellbereich vor der zu reinigenden Formpresse;
- Positionieren der Robotereinheit in einer Start-Position durch eine elektrische Ansteuerung der Verstelleinheit, wobei die Robotereinheit seitlich bzw. in x-Richtung in eine Start-Position in einen Zwischenraum zwischen den Formsegmenten der Formpresse gebracht wird;
- Starten des Reinigungsvorganges durch ein elektrisches Ansteuern der Robotereinheit.

Dabei ist erfindungsgemäß vorgesehen, dass das Positionieren der Robotereinheit in der Start-Position durch Erfassen eines auf den Formsegmenten und/oder auf der Formpresse liegenden Referenz-Bereiches durch eine Kamera erfolgt, wobei die Verstelleinheit derartig elektrisch angesteuert wird, dass eine kamerafeste Struktur, beispielsweise ein Kreuz, in einer festgelegten Relativposition zu einem auf den Formsegmenten und/oder auf der Formpresse in dem Referenz-Bereich angeordneten Referenz-Objekt ausgerichtet wird, vorzugsweise zumindest teilweise in Überdeckung gebracht wird.

Dies ermöglicht in einfacher Weise eine Ausrichtung des Werkzeuges bzw. der Düse relativ zum Formsegment in einer x-y-Ebene, wobei dieser Schritt automatisiert durch einen Algorithmus oder aber manuell durch Beobachten durch eine Bedienperson erfolgen kann.

Ergänzend ist erfindungsgemäß vorgesehen, dass das Positionieren der Robotereinheit in der Start-Position durch Messen eines Abstandes zwischen dem Werkzeug und den Formsegmenten und/oder der Formpresse erfolgt,
wobei die Verstelleinheit derartig elektrisch angesteuert wird, dass der Abstand an einen Referenz-Abstand angenähert wird, vorzugsweise bis der Abstand dem Referenz-Abstand entspricht.

Zur Ausrichtung in der z-Richtung kann also eine einfache Abstands-Messung erfolgen, die ebenfalls automatisiert überwacht werden kann.

Zum vollautomatisierten Einstellen der Start-Position über die Kamera und/oder den Abstand kann beispielsweise vorgesehen sein, dass das Bedienpersonal die Reinigungsanlage in den Abstellbereich in eine grobe Vorposition bringt, von der aus das Referenz-Objekt im Referenz-Bereich, beispielsweise das Kreuz und/oder eine Formmitte des unteren Formsegmentes oder des oberen Formsegmentes, im Kamerabild zu sehen ist. Dazu verwendet das Bedienpersonal z.B. eine manuelle Bedienfunktionen auf einem mobilen Bedienpult.

Ein Algorithmus zur Bildverarbeitung in der Steuereinheit ermittelt anschließend anhand des Kamerabildes automatisch eine Referenz-Position des jeweiligen Referenz-Objektes. Die Steuereinheit positioniert die Robotereinheit anschließend derartig in der Start-Position, dass der Abstands-Sensor auf die zuvor ermittelte Referenz-Position zeigt bzw. die Düse bzw. das Werkzeug in einer definierten Relativ-Position zur Referenz-Position liegen. Damit ist der Steuereinheit die Position der Düse bzw. des Werkzeuges relativ zum jeweiligen Formsegment bekannt, so dass die Steuereinheit die notwendigen Verfahrwege zur Reinigung des jeweiligen Formsegmentes ableiten und das Rezept automatisch abfahren kann.

Die Erfindung wird im Folgenden anhand von Figuren näher erläutert. Es zeigen:
- Fig. 1: eine perspektive Ansicht der Reinigungsanlage;
- Fig. 2: die Reinigungsanlage gemäß Fig. 1 während eines Reinigungsvorganges; und
- Fig. 3a, 3b: Detailansichten zur Justierung einer Robotereinheit der Reinigungsanlage.

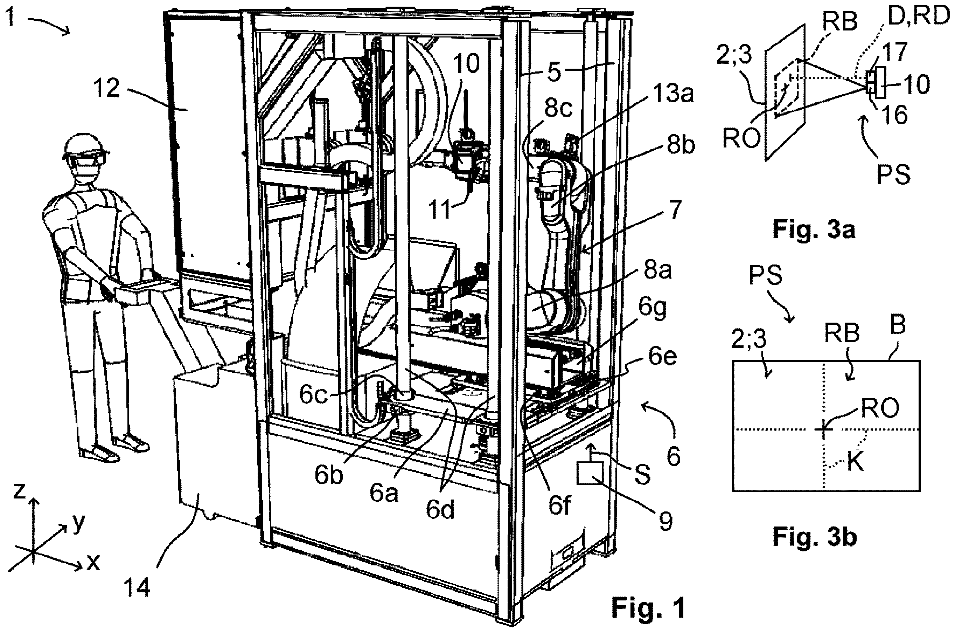

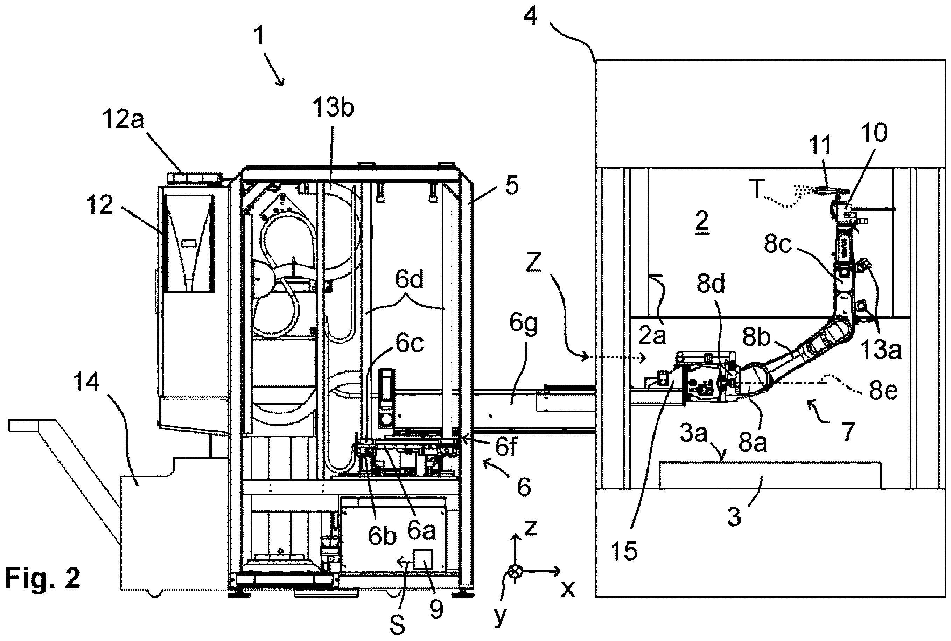

In Figur 1 ist eine Reinigungsanlage 1 dargestellt, mit der Formsegmente 2, 3 einer in Fig. 2 dargestellten Formpresse 4 bzw. Vulkanisierungspresse zum Herstellen von Fahrzeugreifen automatisiert gereinigt werden können. Die Reinigungsanlage 1 weist ein Gestell 5 auf, an dem eine Verstelleinheit 6 angeordnet ist. Auf der Verstelleinheit 6 ist eine Robotereinheit 7 aus drei Roboterarmen 8a, 8b, 8c über einen Roboterfuß 8d befestigt. Die einzelnen Roboterarme 8a, 8b, 8c sind gelenkig miteinander verbunden, so dass ein Verschwenken der Roboterarme 8a, 8b, 8c gegeneinander ermöglicht wird. Gesteuert werden die Verstelleinheit 6 sowie die Robotereinheit 7 über Steuersignale S von einer schematisch angedeuteten Steuereinheit 9.

An einem vorderen Roboterarm 8c der Robotereinheit 7 ist ein Werkzeug 10, das eine Düse 11 hält, angeordnet. Über die Roboterarme 8a, 8b, 8c kann das Werkzeug 10 bzw. die Düse 11 frei im Raum, einschließlich einer Verdrehung, d.h. in allen sechs Freiheitsgraden, bewegt werden. Über einen Roboterfuß 8d, an dem der hintere Roboterarm 8a um eine Drehachse 8e drehbar angeordnet ist, sind die Roboterarme 8a, 8b, 8c an einer Halterung 15 der Verstelleinheit 6 befestigt. Die Halterung 15 ist dabei derartig ausgerichtet, dass die Robotereinheit 7 in einer Wandmontageposition liegt. Das bedeutet, dass der Roboterfuß 8d in einer in der z-y Richtung verlaufenden Ebene befestigt ist bzw. der hintere Roboterarm 8a im Wesentlichen senkrecht von der z-y-Ebene absteht bzw. die Drehachse 8e, um die der hintere Roboterarm 8a rotieren kann, horizontal bzw. in x-Richtung von der Halterung 15 absteht. Diese Wandmontageposition ermöglicht es, wie in Fig. 2 dargestellt, dass das Werkzeug 10 mit der Düse 11 seitlich in bzw. durch einen Zwischenraum Z zwischen den Formsegmenten 2, 3 der Formpresse 4 eingeführt werden kann. Dadurch wird ein seitlicher Zugang für den Reinigungsvorgang ermöglicht.

Die Verstelleinheit 6 dient dazu, die gesamte Robotereinheit 7 in x-, y- und z-Richtung eines kartesischen Koordinatensystems auszurichten. Die Verstelleinheit 6 weist dazu gemäß dieser Ausführungsform eine erste Plattform 6a als Grundplatte auf, an deren Ecken Antriebsmotoren 6b angeordnet sind, die Spindelmuttern 6c antreiben. Die Spindelmuttern 6c sind auf in z-Richtung verlaufenden und an dem Gestell 5 befestigten Spindeln 6d aufgeschraubt. Dadurch kann die gesamte erste Plattform 6a bei einer synchronen Ansteuerung der Antriebsmotoren 6b in z-Richtung nach oben oder unten verstellt werden. Weiterhin ist auf der ersten Plattform 6a der Verstelleinheit 6 ein schienengeführter y-Linearantrieb 6e zur Verstellung einer zweiten Plattform 6f in die y-Richtung und auf der zweiten Plattform 6f ein x-Linearantrieb 6g zur Verstellung der Robotereinheit 7 in die x-Richtung vorgesehen.

Die gemäß dieser Ausführungsform auf der zweiten Plattform 6f montierte Robotereinheit 7 kann dadurch über eine gezielte Ansteuerung der jeweiligen Antriebe 6b, 6e, 6g der Verstelleinheit 6 in einer vorab definierten Start-Position PS im Zwischenraum Z positioniert werden. Die Start-Position PS wird je nach Aufbau der zu reinigenden Formpresse 4 vorgegeben, um den Reinigungsvorgang an der jeweiligen Formpresse 4 ausgehend von dieser Start-Position PS kontrolliert starten zu können. Die Roboterarme 8a, 8b, 8c nehmen in der Start-Position PS im Zwischenraum Z eine festgelegte Stellung (Positionier-Stellung) zueinander ein.

Die Robotereinheit 7 dient während des Reinigungsvorganges dazu, die Düse 11 frei in allen Raumrichtungen des kartesischen Koordinatensystems in allen sechs Freiheitsgraden zu bewegen, um einen aus der Düse 11 austretenden Trockeneisstrahl T frei im Raum auf die Formsegmente 2, 3 ausrichten zu können. Durch den Trockeneisstrahl T können Gummirückstände auf Innenseiten 2a, 3 der Formsegmente 2, 3 entfernt werden. Der Trockeneisstrahl T wird dabei durch Trockeneispallets ausgebildet, die beispielsweise durch Druckluft beschleunigt werden.

Um einen derartigen Trockeneisstrahl T erzeugen zu können, ist auf dem Gestell 5 ein Trockeneisbehälter 12 angeordnet, der von oben über eine Einfüllöffnung 12a befüllt werden kann und der über einen flexiblen Schlauch 13 mit der Düse 11 verbunden ist. Der Schlauch 13 wird dabei gemäß Fig. 2 in Schlauchschellen 13a an den Roboterarmen 8a, 8b, 8c sowie über Schlauchkanäle 13b am Gestell 5 geführt. Das Trockeneis bzw. die Trockeneispallets werden ausgehend vom Trockeneisbehälter 12 über den Schlauch 13 zur Düse 11 gepumpt und von dieser strahlförmig auf die Innenseiten 2a, 3a der Formsegmente 2, 3 geleitet, wo sie zum Ablösen der Verunreinigungen beitragen.

Zur Vorbereitung des Reinigungsvorganges kann die Reinigungsanlage 1 zunächst über einen Hubwagen 14 manuell in einem Abstellbereich A vor der zu reinigenden Formpresse 4 positioniert werden. Über die Verstelleinheit 6 wird die Robotereinheit 7 anschließend auf einer bestimmten Start-Position PS relativ zur Formpresse 4 bzw. zu den einzelnen zu reinigenden Formsegmenten 2, 3 positioniert. Die Wandmontageposition der Robotereinheit 7 ermöglicht dabei das Einführen der Robotereinheit 7 in den Zwischenraum Z. Die Formpresse 4 ist für den Reinigungsvorgang, wie in Fig. 2 dargestellt, geöffnet, d.h. die Formsegmente 2, 3 sind auseinandergefahren, so dass die Innenseiten 2a, 3a der Formsegmente 2, 3 für die Düse 11 aus dem Zwischenraum Z zugänglich sind und gleichzeitig Platz für die beweglichen Roboterarme 8a, 8b, 8c geschaffen ist.

Das exakte Positionieren der Robotereinheit 7 in der Start-Position PS relativ zu den Formsegmenten 2, 3 erfolgt mithilfe einer Kamera 16 sowie eines Abstands-Sensor 17, die gemäß dieser Ausführungsform zusammen mit der Düse 11 an dem Werkzeug 10 angeordnet sind (s. Fig. 3a). Befinden sich die Roboterarme 8a, 8b, 8c in der Positionier-Stellung, so kann die Robotereinheit 7 durch eine Ansteuerung der Verstelleinheit 6 derartig verfahren werden, dass die Kamera 16 einen festgelegten Referenz-Bereich RB auf einem der Formsegmente 2, 3 aufnimmt. Im Kamerabild B der Kamera 16 ist eine kamerafeste Struktur K, beispielsweise ein Kreuz abgebildet, das durch eine Ansteuerung der Verstelleinheit 6 in eine bestimmte Relativposition zu einem von der Kamera 16 aufgenommenen Referenzobjekt RO im Kamerabild B zu bringen ist. Das Referenzobjekt RO befindet sich dabei im Referenz-Bereich RB auf den Formsegmenten 2, 3 und kann beispielsweise durch ein Bauteil des jeweiligen Formsegmentes 2, 3 oder durch eine nachträglich darauf aufgebrachte Struktur ausgebildet werden. Mit der Kamera 16 kann somit eine Ausrichtung der Robotereinheit 7 in der x-y-Ebene erreicht werden.

Über den Abstands-Sensor 17 erfolgt eine Justierung in der z-Richtung, wobei der Abstands-Sensor 17 dazu einen Abstand D zwischen dem Werkzeug 10 und dem Formsegment 2, 3 im Referenz-Bereich RB angibt. Dieser wird durch eine Ansteuerung der Verstelleinheit 6 auf einen vorgegebenen Referenz-Abstand RD eingestellt.

Nach dieser Systematik kann in der Start-Position PS eine definierte Lage des Werkzeuges 10 und damit auch der Düse 11 relativ zu den Formsegmenten 2, 3 eingestellt werden. Diese Justierung durch die Verstelleinheit 6 mithilfe der Kamera 16 und dem Abstands-Sensor 17 kann hierbei manuell durch Beobachten des Kamerabildes B sowie des Abstandes D oder aber über entsprechende Algorithmen, die das Kamerabild B und den Abstand D überwachen, auch automatisiert erfolgen.

Die Positionierung erfolgt dabei vorzugsweise für jedes einzelne Formsegment 2, 3 der Formpresse 4 separat, so dass vor dem Reinigungsvorgang jedes Formsegmentes 2, 3 eine Justierung stattfindet. Ist die relative Lage der beiden Formsegmente 2, 3 im auseinandergefahrenen Zustand bekannt, reicht aber grundsätzlich auch lediglich eine einmalige Positionierung. Nach dieser können beide Formsegmente 2, 3 einer Formpresse 4 nacheinander gereinigt werden.

Für den Reinigungsvorgang erfolgt die Ansteuerung der Roboterarme 8a, 8b, 8c abgestimmt auf die jeweilige Formpresse 4 bzw. deren Formsegmente 2, 3, wobei die Abmessungen sowie die relative Lage der Innenseiten 2a, 2b zur Start-Position PS sowie auch zu dem Werkzeug 10 bzw. der Düse 11 bekannt sind. Dadurch kann durch sukzessives Abfahren der gesamten Innenseiten 2a, 3a eine automatisierte Reinigung erfolgen. Eine Demontage der Formsegmente 2, 3 oder ein aufwendiges Montieren und Justieren der Reinigungsanlage 1 an der Formpresse 4 oder den Formsegmenten 2, 3 kann dadurch entfallen. Es ist lediglich die beschriebene Justierung bzw. Positionierung in die Start-Position PS über die Verstelleinheit 6 nötig. Während des Reinigungsvorganges kann zudem über das Kamerabild B bzw. den gemessenen Abstand D der Prozess manuell oder vollautomatisiert überwacht werden.

### Bezugszeichenliste

- 1: Reinigungsanlage
- 2, 3: Formsegmente
- 2a, 3a: Innenseiten der Formsegmente
- 4: Formpresse
- 5: Gestell
- 6: Verstelleinheit
- 6a: erste Plattform
- 6b: Antriebsmotor
- 6c: Spindelmutter
- 6d: Spindel
- 6e: y-Linearantrieb
- 6f: zweite Plattform
- 6g: x-Linearantrieb
- 7: Robotereinheit
- 8a, 8b, 8c: Roboterarme
- 8d: Roboterfuß
- 8e: Drehachse
- 9: Steuereinheit
- 10: Werkzeug
- 11: Düse
- 12: Trockeneisbehälter
- 12a: Einfüllöffnung
- 13: Schlauch
- 13a: Schlauchschelle
- 13b: Schlauchkanal
- 14: Hubwagen
- 15: Halterung
- 16: Kamera
- 17: Abstands-Sensor
- A: Abstellbereich
- B: Kamerabild
- D: Abstand
- K: kamerafeste Struktur
- PS: Start-Position
- RB: Referenz-Bereich
- RD: Referenz-Abstand
- RO: Referenz-Objekt
- S: Steuersignal
- T: Trockeneisstrahl
- Z: Zwischenraum

## Patentansprüche

1. Reinigungsanlage (1) zum Reinigen von Formsegmenten (2, 3) einer Formpresse (4) mit einem Gestell (5), einem Trockeneisbehälter (12) und einer damit über einen flexiblen Schlauch (13) verbundenen Düse (11) zum Ausbilden eines Trockeneisstrahls (T), wobei die Düse (11) mit einer Verstelleinheit (6) wirkverbunden ist, wobei die Düse (11) durch eine elektrische Ansteuerung der Verstelleinheit (6) relativ zum Gestell (5) bewegt werden kann,
wobei die Düse (11) an einem Werkzeug (10) einer Robotereinheit (7) mit mehreren Roboterarmen (8a, 8b, 8c) angeordnet ist, wobei die Roboterarme (8a, 8b, 8c) derartig gelenkig miteinander verbunden und gegeneinander verschwenkbar sind, dass die Düse (11) bei einer Ansteuerung der Robotereinheit (7) frei im Raum bewegt werden kann,
wobei ein hinterer Roboterarm (8a) um eine Drehachse (8e) drehbar mit einem Roboterfuß (8d) der Robotereinheit (7) verbunden ist, wobei die Robotereinheit (7) über den Roboterfuß (8d) an einer Halterung (15) der Verstelleinheit (6) befestigt ist,
wobei die Halterung (15) derartig ausgerichtet ist, dass die Drehachse (8e) des hinteren Roboterarms (8a) im Wesentlichen horizontal in eine x-Richtung ausgerichtet ist, um der Verstelleinheit (6) zu ermöglichen, die Robotereinheit (7) in eine Start-Position (PS) zwischen den Formsegmenten (2, 3) der Formpresse (4) zu bewegen,
**gekennzeichnet durch**
eine Kamera zum Erfassen eines auf den Formsegmenten (2, 3) und/oder auf der Formpresse (4) liegenden Referenz-Bereiches (RB), und
eine Steuereinheit (9), die ausgebildet ist, die Verstelleinheit (6) zum Einstellen der Start-Position (PS) der Robotereinheit (7) derart anzusteuern, dass eine kamerafeste Struktur (K) in einer festgelegten Relativposition zu einem auf den Formsegmenten (2, 3) und/oder auf der Formpresse (4) in dem Referenz-Bereich (RB) angeordneten Referenz-Objekt (RO) ausgerichtet wird, und
einen Abstands-Sensor (17) zum Messen eines Abstandes (D) zwischen dem Werkzeug (10) und den Formsegmenten (2, 3) und/oder der Formpresse (4), wobei die Steuereinheit (9) ausgebildet ist, die Verstelleinheit (6) zum Einstellen der Start-Position (PS) der Robotereinheit (7) derart elektrisch anzusteuern, dass der Abstand (D) an einen Referenz-Abstand (RD) angenähert wird.

2. Reinigungsanlage (1) nach Anspruch 1,
**dadurch gekennzeichnet, dass**
die Verstelleinheit (6) eine erste Plattform (6a) aufweist, an der Antriebsmotoren (6b) zum Verdrehen von Spindelmuttern (6c) befestigt sind, wobei die Spindelmuttern (6c) auf gestellfesten Spindeln (6d) laufen, so dass durch eine Ansteuerung der Antriebsmotoren (6b) ein Verstellen der ersten Plattform (6a) in eine z-Richtung ermöglicht ist.

3. Reinigungsanlage (1) nach Anspruch 2,
**dadurch gekennzeichnet, dass**
auf der ersten Plattform (6a) ein x-Linearantrieb (6e) sowie ein y-Linearantrieb (6g) angeordnet sind, die mit der Robotereinheit (7) zusammenwirken, zum Verstellen der Robotereinheit (7) in die x- Richtung und/oder die y-Richtung.

4. Reinigungsanlage (1) nach einem der vorhergehenden Ansprüche,
**dadurch gekennzeichnet, dass**
das Werkzeug (10) mit der Düse (11) an einem vorderen Roboterarm (8c) befestigt ist und an dem Werkzeug (10) weiterhin
die Kamera (16) zum Aufnehmen des Referenz-Bereiches (RB) auf den Formsegmenten (2, 3) und/oder auf der Formpresse (4) sowie der Abstands-Sensor (17) zum Messen des Abstandes (D) zwischen dem Referenz-Bereich (RB) auf den Formsegmenten (2, 3) und/oder auf der Formpresse (4) und dem Werkzeug (10) angeordnet sind.

5. Reinigungsanlage (1) nach einem der vorhergehenden Ansprüche,
**dadurch gekennzeichnet, dass**
die Steuereinheit (9) ausgebildet ist, die Robotereinheit (7) zum freien Bewegen der Düse (11) in allen sechs Freiheitsgraden anzusteuern.

6. Reinigungsanlage (1) nach Anspruch 5,
**dadurch gekennzeichnet, dass**
die Steuereinheit (9) ausgebildet ist, die Verstelleinheit (6) und/oder die Robotereinheit (7) vollautomatisiert anzusteuern.

7. Reinigungsanlage (1) nach Anspruch 6,
**dadurch gekennzeichnet, dass**
die Steuereinheit (9) ausgebildet ist, die Verstelleinheit (6) in Abhängigkeit des von dem Abstands-Sensor (17) gemessenen Abstandes (D) und/oder des von der Kamera (16) erfassten Referenz-Bereiches (RB) vollautomatisiert anzusteuern zum vollautomatisierten Positionieren der Robotereinheit (7) in der Start-Position (PS).

8. Reinigungsanlage (1) nach einem der vorhergehenden Ansprüche,
**dadurch gekennzeichnet, dass**
die Reinigungsanlage (1) auf einem Hubwagen (14) angeordnet ist zum Positionieren der Reinigungsanlage in einem Abstellbereich (A).

9. Reinigungsverfahren zum Reinigen einer Formpresse (4) aus Formsegmenten (2, 3) mit einer Reinigungsanlage (1) nach einem der vorhergehenden Ansprüche, mit mindestens den folgenden Schritten:
- Abstellen der Reinigungsanlage (1) in einem Abstellbereich (A) vor der zu reinigenden Formpresse (4);
- Positionieren der Robotereinheit (7) in einer Start-Position (PS) durch eine elektrische Ansteuerung der Verstelleinheit (6), wobei die Robotereinheit (7) seitlich in eine Start-Position (PS) in einen Zwischenraum (Z) zwischen den Formsegmenten (2, 3) der Formpresse (4) gebracht wird;
- Starten des Reinigungsvorganges durch ein elektrisches Ansteuern der Robotereinheit (7);
**dadurch gekennzeichnet, dass** das Positionieren der Robotereinheit (7) in der Start-Position (PS) durch Erfassen eines auf den Formsegmenten (2, 3) und/oder auf der Formpresse (4) liegenden Referenz-Bereiches (RB) durch eine Kamera (16) erfolgt,
wobei die Verstelleinheit (6) derartig elektrisch angesteuert wird, dass eine kamerafeste Struktur (K) in einer festgelegten Relativposition zu einem auf den Formsegmenten (2, 3) und/oder auf der Formpresse (4) in dem Referenz-Bereich (RB) angeordneten Referenz-Objekt (RO) ausgerichtet wird, und
das Positionieren der Robotereinheit (7) in der Start-Position (PS) durch Messen eines Abstandes (D) zwischen dem Werkzeug (10) und den Formsegmenten (2, 3) und/oder der Formpresse (4) erfolgt,
wobei die Verstelleinheit (6) derartig elektrisch angesteuert wird, dass der Abstand (D) an einen Referenz-Abstand (RD) angenähert wird.

10. Reinigungsverfahren nach Anspruch 9,
**dadurch gekennzeichnet, dass** die Verstelleinheit (6) derartig elektrisch angesteuert wird, dass die kamerafeste Struktur (K) in zumindest teilweise Überdeckung mit dem auf den Formsegmenten (2, 3) und/oder auf der Formpresse (4) in dem Referenz-Bereich (RB) angeordneten Referenz-Objekt (RO) gebracht wird.

11. Reinigungsverfahren nach Anspruch 9 oder 10,
**dadurch gekennzeichnet, dass**
die Verstelleinheit (6) derartig elektrisch angesteuert wird, dass der Abstand (D) an einen Referenz-Abstand (RD) angenähert wird, bis der Abstand (D) dem Referenz-Abstand (RD) entspricht.

12. Reinigungsverfahren nach einem der Ansprüche 9 bis 11,
**dadurch gekennzeichnet, dass**
das elektrische Ansteuern der Verstelleinheit (6) und/oder der Robotereinheit (7) vollautomatisiert erfolgt, wobei die Robotereinheit (7) zum vollautomatisierten Einstellen der Start-Position (PS) über die Kamera (16) und/oder den Abstand (D) zunächst in eine Vorposition gebracht wird, wobei das Referenz-Objekt (RO) in der Vorposition im Referenz-Bereich (RB) im Kamerabild (B) enthalten ist, und anschließend durch Bildverarbeitung anhand des Kamerabildes (B) eine Referenz-Position des jeweiligen Referenz-Objektes (RO) ermittelt wird und die Robotereinheit (7) anschließend in Abhängigkeit der ermittelten Referenz-Position automatisiert in eine derartige Start-Position (PS) gebracht wird, dass in der Start-Position (PS) der Abstand (D) zu der zuvor ermittelten Referenz-Position ermittelt werden kann und die Düse (11) in einer festgelegten Relativposition zum Referenz-Objekt (RO) liegt.

13. Reinigungsverfahren nach einem der Ansprüche 9 bis 12,
**dadurch gekennzeichnet, dass**
die Start-Position (PS) derartig gewählt wird, dass die in der Start-Position (PS) positionierte Robotereinheit (7) beide Formsegmente (2, 3) der Formpresse (4) mit der Düse (11) erreichen kann.

## Claims

1. Cleaning system (1) for cleaning mould segments (2, 3) of a mould press (4), the cleaning system comprising a frame (5), a dry-ice container (12) and a nozzle (11), which is connected to the dry-ice container via a flexible hose (13), for forming a dry-ice jet (T), wherein the nozzle (11) is operatively connected to an adjusting unit (6), wherein the nozzle (11) can be moved relative to the frame (5) by electrically actuating the adjusting unit (6),
wherein the nozzle (11) is arranged on a tool (10) of a robot unit (7) having a plurality of robot arms (8a, 8b, 8c), wherein the robot arms (8a, 8b, 8c) are connected to each other in an articulated manner and can be pivoted in relation to each other in such a way that the nozzle (11) can be moved freely in space when the robot unit (7) is actuated,
wherein a rear robot arm (8a) is connected to a robot foot (8d) of the robot unit (7) rotatably about a rotation axis (8e), wherein the robot unit (7) is fastened to a holder (15) of the adjusting unit (6) via the robot foot (8d),
wherein the holder (15) is oriented in such a way that the rotation axis (8e) of the rear robot arm (8a) is oriented substantially horizontally in an x-direction in order to allow the adjusting unit (6) to move the robot unit (7) to a start position (PS) between the mould segments (2, 3) of the mould press (4),
**characterized by**
a camera for capturing a reference region (RB) situated on the mould segments (2, 3) and/or on the mould press (4), and a control unit (9) which is designed to actuate the adjusting unit (6) for setting the start position (PS) of the robot unit (7) in such a way that a structure (K) fixed to the camera is oriented in a defined position relative to a reference object (RO) arranged on the mould segments (2, 3) and/or on the mould press (4) in the reference region (RB), and
a distance sensor (17) for measuring a distance (D) between the tool (10) and the mould segments (2, 3) and/or the mould press (4), wherein the control unit (9) is designed to electrically actuate the adjusting unit (6) for setting the start position (PS) of the robot unit (7) in such a way that the distance (D) approximates a reference distance (RD).

2. Cleaning system (1) according to Claim 1,
**characterized in that**
the adjusting unit (6) has a first platform (6a), on which drive motors (6b) for turning spindle nuts (6c) are fastened, wherein the spindle nuts (6c) run on spindles (6d) fixed to the frame, so that the first platform (6a) can be adjusted in a z-direction by actuating the drive motors (6b).

3. Cleaning system (1) according to Claim 2,
**characterized in that**
an x-linear drive (6e) and a y-linear drive (6g) are arranged on the first platform (6a), the x-linear drive and the y-linear drive interacting with the robot unit (7) to adjust the robot unit (7) in the x-direction and/or y-direction.

4. Cleaning system (1) according to any of the preceding claims,
**characterized in that**
the tool (10) with the nozzle (11) is fastened to a front robot arm (8c) and the tool (10) also has arranged on it
the camera (16) for recording the reference region (RB) on the mould segments (2, 3) and/or on the mould press (4) and also
the distance sensor (17) for measuring the distance (D) between the reference region (RB) on the mould segments (2, 3) and/or on the mould press (4) and the tool (10).

5. Cleaning system (1) according to any of the preceding claims,
**characterized in that**
the control unit (9) is designed to actuate the robot unit (7) to freely move the nozzle (11) in all six degrees of freedom.

6. Cleaning system (1) according to Claim 5,
**characterized in that**
the control unit (9) is designed to actuate the adjusting unit (6) and/or the robot unit (7) in a fully automated manner.

7. Cleaning system (1) according to Claim 6,
**characterized in that**
the control unit (9) is designed to actuate the adjusting unit (6) in a fully automated manner depending on the distance (D) measured by the distance sensor (17) and/or the reference region (RB) captured by the camera (16) for positioning the robot unit (7) in the start position (PS) in a fully automated manner.

8. Cleaning system (1) according to any of the preceding claims,
**characterized in that**
the cleaning system (1) is arranged on a lifting truck (14) for positioning the cleaning system in a parking region (A).

9. Cleaning method for cleaning a mould press (4) comprising mould segments (2, 3) using a cleaning system (1) according to any of the preceding claims, the method comprising at least the following steps:
- parking the cleaning system (1) in a parking region (A) in front of the mould press (4) to be cleaned;
- positioning the robot unit (7) in a start position (PS) by electrically actuating the adjusting unit (6), wherein the robot unit (7) is moved laterally to a start position (PS) in an intermediate space (Z) between the mould segments (2, 3) of the mould press (4);
- starting the cleaning process by electrically actuating the robot unit (7); **characterized in that** the robot unit (7) is positioned in the start position (PS) by a reference region (RB) situated on the mould segments (2, 3) and/or on the mould press (4) being captured by a camera (16),
wherein the adjusting unit (6) is electrically actuated in such a way that a structure (K) fixed to the camera is oriented in a defined position relative to a reference object (RO) arranged on the mould segments (2, 3) and/or on the mould press (4) in the reference region (RB), and
the robot unit (7) is positioned in the start position (PS) by measuring a distance (D) between the tool (10) and the mould segments (2, 3) and/or the mould press (4),
wherein the adjusting unit (6) is electrically actuated in such a way that the distance (D) approximates a reference distance (RD).

10. Cleaning method according to Claim 9,
**characterized in that** the adjusting unit (6) is electrically actuated in such a way that the structure (K) fixed to the camera is moved to at least partially overlap the reference object (RO) arranged on the mould segments (2, 3) and/or on the mould press (4) in the reference region (RB).

11. Cleaning method according to Claim 9 or 10,
**characterized in that**
the adjusting unit (6) is electrically actuated in such a way that the distance (D) approximates a reference distance (RD), until the distance (D) corresponds to the reference distance (RD).

12. Cleaning method according to any of Claims 9 to 11,
**characterized in that**
the adjusting unit (6) and/or the robot unit (7) are/is electrically actuated in a fully automated manner, wherein the robot unit (7) is initially moved to a preliminary position for setting the start position (PS) by means of the camera (16) and/or the distance (D) in a fully automated manner, wherein the reference object (RO) is contained in the reference region (RB) in the camera image (B) in the preliminary position, and then image processing on the basis of the camera image (B) is used to determine a reference position of the respective reference object (RO) and the robot unit (7) is then moved to such a start position (PS) in an automated manner depending on the determined reference position that, in the start position (PS), the distance (D) from the previously determined reference position can be determined and the nozzle (11) is situated in a defined position relative to the reference object (RO).

13. Cleaning method according to any of Claims 9 to 12,
**characterized in that**
the start position (PS) is selected in such a way that the robot unit (7) positioned in the start position (PS) can reach both mould segments (2, 3) of the mould press (4) with the nozzle (11).

## Revendications

1. Installation de nettoyage (1) permettant de nettoyer des segments de moule (2, 3), comprenant une presse à mouler (4) pourvue d'un bâti (5), un récipient à glace carbonique (12) et une buse (11) reliée à celui-ci par un tuyau flexible (13) pour réaliser un jet de glace carbonique (T), dans laquelle la buse (11) est en relation active avec une unité de réglage (6), la buse (11) pouvant être déplacée par rapport au bâti (5) par pilotage électrique de l'unité de réglage (6),
dans laquelle la buse (11) est disposée sur un outil (10) d'une unité robotisée (7) pourvue de plusieurs bras de robot (8a, 8b, 8c), dans laquelle les bras de robot (8a, 8b, 8c) sont reliés les uns aux autres de manière articulée et sont pivotants les uns par rapport aux autres de telle sorte que la buse (11) peut être déplacée librement dans l'espace en cas de pilotage de l'unité robotisée (7),
dans laquelle un bras de robot arrière (8a) est relié en rotation autour d'un axe de rotation (8e) à un pied de robot (8d) de l'unité robotisée (7), l'unité robotisée (7) étant fixée par l'intermédiaire du pied de robot (8d) à un support (15) de l'unité de réglage (6),
dans laquelle le support (15) est aligné de telle sorte que l'axe de rotation (8e) du bras de robot arrière (8a) est aligné de manière substantiellement horizontale dans une direction x afin de permettre à l'unité de réglage (6) de déplacer l'unité robotisée (7) dans une position de départ (PS) entre les segments de moule (2, 3) de la presse à mouler (4),
**caractérisée par**
une caméra pour détecter une zone de référence (RB) située sur les segments de moule (2, 3) et/ou sur la presse à mouler (4), et une unité de commande (9) qui est réalisée pour piloter l'unité de réglage (6) afin de régler la position de départ (PS) de l'unité robotisée (7) de telle sorte qu'une structure (K) solidaire de la caméra est alignée dans une position relative définie par rapport à un objet de référence (RO) disposé sur les segments de moule (2, 3) et/ou sur la presse à mouler (4) dans la zone de référence (RB), et
un capteur de distance (17) pour mesurer une distance (D) entre l'outil (10) et les segments de moule (2, 3) et/ou la presse à mouler (4), dans laquelle l'unité de commande (9) est réalisée pour piloter électriquement l'unité de réglage (6) pour régler la position de départ (PS) de l'unité robotisée (7) de sorte que la distance (D) est approchée d'une distance de référence (RD).

2. Installation de nettoyage (1) selon la revendication 1,
**caractérisée en ce que**
l'unité de réglage (6) présente une première plateforme (6a) à laquelle sont fixés des moteurs d'entraînement (6b) pour faire tourner des écrous de broche (6c), les écrous de broche (6c) tournant sur des broches (6d) solidaires du bâti de sorte qu'un pilotage des moteurs d'entraînement (6b) permet de régler la première plateforme (6a) dans une direction z.

3. Installation de nettoyage (1) selon la revendication 2,
**caractérisée en ce que**
sur la première plateforme (6a), un entraînement linéaire x (6e) ainsi qu'un entraînement linéaire y (6g) sont disposés qui coopèrent avec l'unité robotisée (7) pour régler l'unité robotisée (7) dans la direction x et/ou la direction y.

4. Installation de nettoyage (1) selon l'une quelconque des revendications précédentes,
**caractérisée en ce que**
l'outil (10) pourvu de la buse (11) est fixé à un bras de robot avant (8c), et en plus sur l'outil (10)
la caméra (16) pour enregistrer la zone de référence (RB) sur les segments de moule (2, 3) et/ou sur la presse à mouler (4), ainsi que
le capteur de distance (17) pour mesurer la distance (D) sont disposés entre la zone de référence (RB) sur les segments de moule (2, 3) et/ou sur la presse à mouler (4) et l'outil (10).

5. Installation de nettoyage (1) selon l'une quelconque des revendications précédentes,
**caractérisée en ce que**
l'unité de commande (9) est réalisée pour piloter l'unité robotisée (7) pour déplacer librement la buse (11) dans l'ensemble des six degrés de liberté.

6. Installation de nettoyage (1) selon la revendication 5,
**caractérisée en ce que**
l'unité de commande (9) est réalisée pour piloter l'unité de réglage (6) et/ou pour piloter l'unité robotisée (7) de manière entièrement automatisée.

7. Installation de nettoyage (1) selon la revendication 6,
**caractérisée en ce que**
l'unité de commande (9) est réalisée pour piloter de manière entièrement automatisée l'unité de réglage (6) en fonction de la distance (D) mesurée par le capteur de distance (17), et/ou de la zone de référence (RB) détectée par la caméra (16) pour un positionnement entièrement automatisé de l'unité robotisée (7) dans la position de départ (PS).

8. Installation de nettoyage (1) selon l'une quelconque des revendications précédentes,
**caractérisée en ce que**
l'installation de nettoyage (1) est disposée sur un chariot élévateur (14) pour positionner l'installation de nettoyage dans une zone de stationnement (A).

9. Procédé de nettoyage permettant de nettoyer une presse à mouler (4) composée de segments de moule (2, 3), comprenant une installation de nettoyage (1) selon l'une quelconque des revendications précédentes, comprenant au moins les étapes suivantes, consistant à :
- stationner l'installation de nettoyage (1) dans une zone de stationnement (A) devant la presse à mouler (4) à nettoyer ;
- positionner l'unité robotisée (7) dans une position de départ (PS) par un pilotage électrique de l'unité de réglage (6), l'unité robotisée (7) étant amenée latéralement dans une position de départ (PS) dans un espace (Z) entre les segments de moule (2, 3) de la presse à mouler (4) ;
- démarrer le processus de nettoyage par un pilotage électrique de l'unité robotisée (7) ;
**caractérisé en ce que** le positionnement de l'unité robotisée (7) dans la position de départ (PS) est effectué en détectant par une caméra (16) une zone de référence (RB) située sur les segments de moule (2, 3) et/ou sur la presse à mouler (4), dans lequel l'unité de réglage (6) est pilotée électriquement de telle sorte qu'une structure solidaire de la caméra (K) est alignée dans une position relative définie sur un objet de référence (RO) disposé sur les segments de moule (2, 3) et/ou sur la presse à mouler (4) dans la zone de référence (RB), et
le positionnement de l'unité robotisée (7) dans la position de départ (PS) est effectué en mesurant une distance (D) entre l'outil (10) et les segments de moule (2, 3) et/ou la presse à mouler (4),
dans lequel l'unité de réglage (6) est pilotée électriquement de telle sorte que la distance (D) est approchée d'une distance de référence (RD).

10. Procédé de nettoyage selon la revendication 9,
**caractérisé en ce que** l'unité de réglage (6) est pilotée électriquement de telle sorte qu'une structure solidaire de la caméra (K) est amenée au moins partiellement en recouvrement avec l'objet de référence (RO) disposé sur les segments de moule (2, 3) et/ou sur la presse à mouler (4) dans la zone de référence (RB).

11. Procédé de nettoyage selon la revendication 9 ou la revendication 10, **caractérisée en ce que**
l'unité de réglage (6) est pilotée électriquement de telle sorte que la distance (D) est approchée d'une distance de référence (RD) jusqu'à ce que la distance (D) corresponde à la distance de référence (RD).

12. Procédé de nettoyage selon l'une quelconque des revendications 9 à 11, **caractérisée en ce que**
le pilotage électrique de l'unité de réglage (6) et/ou de l'unité robotisée (7) est effectué de manière entièrement automatisée, dans lequel l'unité robotisée (7) est d'abord amenée dans une position préliminaire pour le réglage entièrement automatisé de la position de départ (PS) par la caméra (16) et/ou la distance (D), dans lequel l'objet de référence (RO) dans la position préliminaire est compris dans la zone de référence (RB) sur l'image de caméra (B), et ensuite une position de référence de l'objet de référence (RO) respectif est établie par traitement d'image à l'aide de l'image de caméra (B), et l'unité robotisée (7) est ensuite amenée de manière automatisée dans une position de départ (PS) en fonction de la position de référence telle que dans la position de départ (PS) la distance (D) par rapport à la position de référence établie précédemment peut être établie et la buse (11) se trouve dans une position relative définie par rapport à l'objet de référence (RO).

13. Procédé de nettoyage selon l'une quelconque des revendications 9 à 12, **caractérisée en ce que**
la position de départ (PS) est choisie de telle sorte que l'unité robotisée (7) positionnée dans la position de départ (PS) peut atteindre par la buse (11) les deux segments de moule (2, 3) de la presse à mouler (4).
